# EUROPEAN PATENT SPECIFICATION

(11) **EP 4 385 952 B1**
(45) Date of publication and mention of the grant of the patent: **22.10.2025**
(21) Application number: 23190091.1
(22) Date of filing: 07.08.2023
(51) Int. Cl.: C01G 53/00, C01G 53/04, H01M 4/131, H01M 4/36, H01M 4/525, C01G 53/42, C01G 53/50, C01G 53/82

(54) **POSITIVE ACTIVE MATERIAL FOR RECHARGEABLE LITHIUM BATTERY AND RECHARGEABLE LITHIUM BATTERY INCLUDING THE SAME**
POSITIVES AKTIVMATERIAL FÜR EINE WIEDERAUFLADBARE LITHIUMBATTERIE UND WIEDERAUFLADBARE LITHIUMBATTERIE DAMIT
MATÉRIAU ACTIF POSITIF POUR BATTERIE AU LITHIUM RECHARGEABLE ET BATTERIE AU LITHIUM RECHARGEABLE LE COMPRENANT

(30) Priority: 14.12.2022 KR 20220175050; 08.06.2023 KR 20230073465
(43) Date of publication of application: 19.06.2024
(73) Proprietor: Samsung SDI Co., Ltd., Yongin-si, Gyeonggi-do 17084 (KR)
(72) Inventor: KIM, Jinhwa, 17084 Yongin-si (KR); KIM, Minhan, 17084 Yongin-si (KR); SEOG, Jihyun, 17084 Yongin-si (KR); CHAE, Youngjoo, 17084 Yongin-si (KR); LEE, Soonrewl, 17084 Yongin-si (KR); YANG, Wooyoung, 17084 Yongin-si (KR); CHOI, Ickkyu, 17084 Yongin-si (KR); KIM, Jongmin, 17084 Yongin-si (KR); IM, Jongsan, 17084 Yongin-si (KR)
(74) Representative: Marks & Clerk LLP

(56) References cited:
- US-A1- 2022 020 984
- US-A1- 2022 216 463
- US-B2- 11 121 362

## Description

### BACKGROUND OF THE INVENTION

### (a) Field of the Invention

A positive active material for a rechargeable lithium battery and a rechargeable lithium battery including the same are disclosed.

### (b) Description of the Related Art

A portable information device such as a cell phone, a laptop, smart phone, and the like or an electric vehicle has used a rechargeable lithium battery having high energy density and easy portability as a driving power source. Recently, research has been actively conducted to use a rechargeable lithium battery with high energy density as a driving power source or power storage power source for hybrid or electric vehicles.

Various positive active materials have been investigated to realize rechargeable lithium batteries for applications to the uses. Among them, lithium nickel-based oxide, lithium nickel manganese cobalt composite oxide, lithium nickel cobalt aluminium composite oxide, and lithium cobalt oxide are mainly used as positive active materials. However, these positive active materials have structure collapses or cracks during the repeated charges and discharges and thus problems of deteriorating a long-term cycle-life of a rechargeable lithium battery and increasing resistance and thus exhibit no satisfactory capacity characteristics. Accordingly, development of a novel positive active material securing long-term cycle-life characteristics as well as realizing high capacity and high energy density is required. US11121362 B2 discloses a positive electrode active material comprising a first lithium nickel composite oxide made of secondary particles on which a coating is present and a second lithium nickel composite oxide made of single particles on which a second coating is present. The coating layers are made of metal oxides. Zr can be present in the coatings.

### SUMMARY OF THE INVENTION

Efficiency in the preparing process of a positive active material in a form of a single particle may be maximized, and capacity and efficiency of a mixed positive active material, initial capacity, initial efficiency and cycle-life characteristics of a rechargeable lithium battery, and productivity are improved.

In an embodiment, a positive active material for a rechargeable lithium battery includes a first positive active material including a secondary particle including lithium nickel-based composite oxide wherein in the secondary particle, a plurality of primary particles are aggregated, and zirconium on the surface of the secondary particle, and a second positive active material including a single particle including lithium nickel-based composite oxide and zirconium on the surface of the single particle, wherein a ratio of a Zr content (at%) relative to all elements on the surface of the single particle of the second positive active material to a Zr content (at%) to all elements on the surface of the secondary particle of the first positive active material is about 1.5 to about 3.0.

In another embodiment, a rechargeable lithium battery includes a positive electrode including the positive active material, a negative electrode, and an electrolyte.

At least some of the above and other features of the invention are set out in the claims.

The positive active material for a rechargeable lithium battery prepared according to an embodiment has improved productivity, initial capacity, initial efficiency, and cycle-life characteristics.

### BRIEF DESCRIPTION OF THE DRAWINGS

FIG. 1 is a schematic view illustrating a rechargeable lithium battery according to an embodiment.
FIG. 2 is a SEM image of the surface of the first positive active material half-finished product prepared in Example 1.
FIG. 3 is a SEM image of the surface of the second positive active material half-finished product prepared in Example 1.
FIG. 4 is a graph showing the Zr content (at%) compared to all elements on the surface of the positive active material as a result of SEM-EDS analysis of the surface of the final positive active materials of Example 1 and Comparative Example 1.
FIG. 5 is a graph showing the ratio of Ni element content (at%) to Zr element content (at%) on the surface of the positive active material as a result of SEM-EDS analysis of the surface of the final positive active materials of Example 1 and Comparative Example 1.
FIG. 6 is a graph showing the Zr content (at%) compared to the total metal excluding lithium on the surface of the positive active material as a result of SEM-EDS analysis of the surface of the final positive active materials of Example 1 and Comparative Example 1.
FIG. 7 is a graph showing cycle-life characteristics of Example 1 and Comparative Example 1.

### DETAILED DESCRIPTION OF THE EMBODIMENTS

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present invention. The singular expression includes the plural expression unless the context clearly dictates otherwise.

As used herein, "combination thereof" means a mixture, laminate, composite, copolymer, alloy, blend, reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, numbers, steps, elements, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. **In** contrast, when an element is referred to as being "directly on" another element, there are no intervening elements present.

In addition, "layer" herein includes not only a shape formed on the whole surface when viewed from a plan view, but also a shape formed on a partial surface.

In addition, the average particle diameter may be measured by a method well known to those skilled in the art, for example, may be measured by a particle size analyzer, or may be measured by a transmission electron micrograph or a scanning electron micrograph. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter (D50) of particles having a cumulative volume of 50 volume% in the particle size distribution.

Herein, "or" is not to be construed as an exclusive meaning, for example, "A or B" is construed to include A, B, A+B, and the like.

"Metal" is interpreted as a concept including ordinary metals, transition metals and metalloids (semi-metals).

### Positive Active Material

In an embodiment, a positive active material for a rechargeable lithium battery includes a first positive active material including a secondary particle including lithium nickel-based composite oxide wherein in the secondary particle, a plurality of primary particles are aggregated, and zirconium on the surface of the secondary particle, and a second positive active material including a single particle including lithium nickel-based composite oxide and zirconium on the surface of the single particle. Herein, a ratio of a Zr content (at%) relative to all elements on the surface of the single particle of the second positive active material to a Zr content (at%) to all elements on the surface of the secondary particle of the first positive active material is about 1.5 to about 3.0, or the ratio may be, for example, about 1.5 to about 2.5, or about 1.8 to about 2.5. This means that Zr is more coated on the surface of the single particle than on the surface of the secondary particle in the mixed positive active material of the single particle and the secondary particle and particularly, the ratio of the Zr content on the single particle surface relative to the Zr content on the secondary particle surface is about 1.5 to about 3.0. The positive active material satisfying this range may not only realize high capacity and energy density but also exhibit improved initial efficiency and cycle-life characteristics and realize very high productivity.

A ratio of a Zr element content relative to a Ni element content on the surface of the single particle of the second positive active material to a Zr element content ratio relative to a Ni element content on the surface of the secondary particle of the first positive active material may be about 2.0 to about 4.0, for example, about 2.0 to about 3.0 or about 2.3 to about 3.0.

In addition, a ratio of a Zr content (at%) relative to the total metal excluding lithium on the surface of the single particle of the second positive active material to a Zr content (at%) relative to the total metal excluding lithium on the surface of the secondary particle of the first positive active material may be about 2.3 to about 5.0, for example, about 2.3 to about 4.0, about 2.3 to about 3.3, or about 2.6 to about 3.3.

Herein, a method of measuring the Zr content or the like on the surface of the positive active material may be to perform scanning electron microscope-energy dispersive X-ray spectroscopy (SEM-EDS) on the surface of the positive active material and measure it through quantitative analysis. In addition to SEM-EDS, methods for measuring Zr content may include Inductively Coupled Plasma-Mass Spectrometry (ICP-MS), Inductively Coupled Plasma Optical Emission Spectroscopy (ICP-OES), etc.

The first positive active material is in the form of the secondary particle in which at least two or more primary particles are aggregated, for example, in the form of polycrystal. The second positive active material is in the form of a single particle, exists alone without a grain boundary within the particle, is composed of one particle, and has a monolith structure, a one body structure, or a non-aggregated particle, in which particles are not aggregated with each other but exist as an independent phase in terms of morphology, and may be expressed as a single particle (one body particle, single grain), for example, as a single crystal.

An average particle diameter of the secondary particle of the first positive active material may be greater than an average particle diameter of the single particle of the second positive active material. Accordingly, the first positive active material may be expressed as large particles, and the second positive active material may be expressed as small particles. For example, the average particle diameter of the secondary particle of the first positive active material may be about 5 µm to about 25 µm, for example, about 7 µm to about 25 µm, about 10 µm to about 20 µm, or about 12 µm to about 18 µm. The average particle diameter of the single particle of the second positive active material may be about 1 µm to about 10 µm, for example, about 1 µm to about 8 µm, about 1 µm to about 6 µm, or about 2 µm to about 5 µm. When the first positive active material and the second positive active material each satisfy the above particle size ranges, the mixture density may be improved and high capacity and energy density may be realized. Herein, the average particle diameter of the first positive active material may be obtained by measuring the particle diameter of about 20 active materials in the form of the secondary particle randomly in a scanning electron microscope photograph of the positive active material, and taking the diameter (D50) of the particle having a cumulative volume of 50 volume% in the particle size distribution as the average particle diameter. In addition, the average particle diameter of the second positive active material may be obtained by measuring the particle diameter of about 20 active materials in the form of the single particle randomly in a scanning electron microscope photograph of the positive active material, and taking the diameter (D50) of the particle having a cumulative volume of 50 volume% in the particle size distribution as the average particle diameter.

**In** the positive active material according to an embodiment, the first positive active material may be included in an amount of about 60 wt% to about 95 wt%, and the second positive active material may be included in an amount of about 5 wt% to about 40 wt% based on the total amount of the first positive active material and the second positive active material. The first positive active material may be, for example, included in an amount of about 60 wt% to about 90 wt%, or about 70 wt% to about 90 wt% and the second positive active material may be, for example, included in an amount of about 10 wt% to about 40 wt%, or about 10 wt% to about 30 wt%. When the content ratio of the first positive active material and the second positive active material is as described above, the positive active material including the same may realize high capacity, improve a mixture density, and exhibit high energy density.

The first positive active material and the second positive active material may be, for example, a high nickel-based positive active material. For example, in the lithium nickel-based composite oxide, the nickel content may be greater than or equal to about 80 mol%, for example, greater than or equal to about 85 mol%, greater than or equal to about 90 mol%, or greater than or equal to about 91 mol%, and less than or equal to about 99.9 mol%, or less than or equal to about 99 mol% based on 100 mol% of the metal excluding lithium. Such a high-nickel-based positive active material may realize high capacity and high performance.

Specifically, the first positive active material and the second positive active material may each independently include a lithium nickel-based composite oxide represented by Chemical Formula 1.

[Chemical Formula 1] Liₐ₁Niₓ₁M¹_{y1}M²_{z1}O_{2-b1}X_{b1}

In Chemical Formula 1, 0.9≤a1≤1.8, 0.7≤x1≤1, 0≤y1≤0.3, 0≤z1≤0.3, 0.9≤x1+y1+z1≤1.1, 0≤b1≤0.1, M¹ and M² are each independently at least one element selected from Al, B, Ba, Ca, Ce, Co, Cr, Cu, Fe, Mg, Mn, Mo, Nb, Si, Sr, Ti, V, W, and Zr, and X is at least one element selected from F, P, and S.

In Chemical Formula 1, for example, 0.8≤x1≤1, 0≤y1≤0.2, and 0≤z1≤0.2, or 0.9≤x1≤1, 0≤y1≤0.1, and 0≤z1≤0.1.

For example, the first positive active material and the second positive active material may each independently include a lithium nickel-cobalt-based composite oxide represented by Chemical Formula 2.

[Chemical Formula 2] Liₐ₂Niₓ₂Co_{y2}M³_{z2}O_{2-b2}X_{b2}

In Chemical Formula 2, 0.9≤a2≤1.8, 0.7≤x2<1, 0<y2≤0.3, 0≤z2≤0.3, 0.9≤x2+y2+z2≤1.1, 0≤b2≤0.1, M³ is at least one element selected from Al, B, Ba, Ca, Ce, Cr, Cu, Fe, Mg, Mn, Mo, Nb, Si, Sr, Ti, V, W, and Zr, and X is at least one element selected from F, P, and S.

In Chemical Formula 2, for example, 0.8≤x2≤0.99, 0.01≤y2≤0.2, and 0.01≤z2≤0.2, or 0.9≤x2≤0.99, 0.01≤y2≤0.1, and 0.01≤z2≤0.1.

For example, the first positive active material and the second positive active material may each independently include a lithium nickel-based composite oxide represented by Chemical Formula 3. The compound represented by Chemical Formula 3 may be referred to as lithium nickel-cobalt-aluminium oxide or lithium nickel-cobalt-manganese oxide.

[Chemical Formula 3] Liₐ₃Niₓ₃Co_{y3}M⁴_{z3}M⁵_{w3}O_{2-b3}X_{b3}

In Chemical Formula 3, 0.9≤a3≤1.8, 0.7≤x3≤0.98, 0.01≤y3≤0.29, 0.01≤z3≤0.29, 0≤w3≤0.29, 0.9≤x3+y3+z3+w3≤1.1, 0≤b3≤0.1, M⁴ is at least one element selected from Al and Mn, M⁵ is at least one element selected from B, Ba, Ca, Ce, Cr, Cu, Fe, Mg, Mo, Nb, Si, Sr, Ti, V, W, and Zr, and X is at least one element selected from F, P, and S.

In Chemical Formula 3, for example, 0.85≤x3≤0.98, 0.01≤y3≤0.14, 0.01≤z3≤0.14, and 0≤w3≤0.14, or 0.9≤x3≤0.98, 0.01≤y3≤0.09, 0.01≤z3≤0.09, and 0≤w3≤0.09.

For example, the first positive active material and the second positive active material may each independently include cobalt-free lithium nickel-manganese oxide represented by Chemical Formula 4.

[Chemical Formula 4] Liₐ₄Niₓ₄Mn_{y4}M⁶_{z4}O_{2-b4}X_{b4}

In Chemical Formula 4, 0.9≤a4≤1.8, 0.7≤x4<1, 0<y4≤0.3, 0≤z4≤0.3, 0.9≤x4+y4+z4≤1.1, 0≤b4≤0.1, M⁶ is at least one element selected from Al, B, Ba, Ca, Ce, Cr, Cu, Fe, Mg, Mo, Nb, Si, Sr, Ti, V, W, and Zr, and X is at least one element selected from F, P, and S.

### Method of Preparing Positive Active Material

An embodiment provides a method of manufacturing a positive active material, which includes (i) mixing a nickel-based composite hydroxide and a lithium raw material and then, conducting a first heat treatment to prepare a first positive active material half-finished product in the form of secondary particle in which a plurality of primary particles are aggregated, (ii) mixing a nickel-based composite hydroxide, a lithium raw material, and a zirconium raw material and then, performing a second heat treatment and pulverization to prepare a second positive active material half-finished product in the form of single particle, and (iii) mixing the first positive active material half-finished product and the second positive active material half-finished product, adding the zirconium raw material to the mixed products, and conducting a third heat treatment.

Conventionally, a method of mixing a positive active material in a form of a secondary particle with another positive active material in a form of a single particle and coating an element such as zirconium and the like thereon has been adopted, wherein zirconium is more coated on the secondary particle than the single particle. The reason is that the secondary particle has a higher specific surface area, an overall larger average particle diameter, and a much higher weight ratio than the single particle. However, degradation of the single particle is accelerated, resulting in a decrease in efficiency and deteriorating cycle-life characteristics. On the contrary, according to the method of an embodiment, zirconium may be more coated on the surface of the single particle than the secondary particle and particularly, in a Zr content ratio of about 1.5 to about 3.0 on the surface of the single particle relative to the Zr content on the surface of the secondary particle, thereby suppressing deterioration of the single particle and balancing degradation rates of 2 types of particles and resultantly, improving cycle-life characteristics of a battery.

The nickel-based composite hydroxide may mean a positive active material precursor. The first positive active material half-finished product and the second positive active material half-finished product respectively include a lithium nickel-based composite oxide, which mean a state before a final zirconium coating process.

The nickel-based composite hydroxide may be represented by Chemical Formula 11.

[Chemical Formula 11] Niₓ₁₁M¹¹_{y11}M¹²_{z11}(OH)₂

In Chemical Formula 11, 0.7≤x11≤1, 0≤y11≤0.3, 0≤z11≤0.3, and 0.9≤x11+y11+z11≤1.1, wherein M¹¹ and M¹² are each independently one or more elements selected from the group consisting of Al, B, Ba, Ca, Ce, Co, Cr, Cu, Fe, Mg, Mn, Mo, Nb, Si, Sr, Ti, V, W, and Zr.

In the step of preparing the first positive electrode active material half-finished product, the first heat treatment may be carried out at about 600°C to 850°C, for example at 650°C to 800°C or 700°C to 780°C, and may be carried out for about 5 hours to 25 hours, for example for 10 hours to 20 hours. The first heat treatment temperature may be equal to or lower than the second heat treatment temperature, and the first heat treatment time may be equal to or longer than the second heat treatment time.

In the step of manufacturing the second positive active material half-finished product, the second heat treatment may be performed at about 650 °C to about 850 °C, for example, about 700 °C to about 820 °C, about 750 °C to about 800 °C. In addition, the second heat treatment may be performed for about 5 hours to about 12 hours, for example, about 6 hours to about 10 hours. In general, the single particles are prepared by firing at a high temperature of greater than or equal to about 900 °C for a long time of greater than or equal to about 12 hours. On the contrary, in an embodiment, the single particle is prepared by using a zirconium raw material and firing at a relatively low temperature for a shorter firing time, which may greatly increase a weight of the single particle produced per day and thus about 10 times increase productivity. In addition, the conventional method of firing at a high temperature has difficulties in pulverizing particles due to overfiring and controlling particle shapes, but the embodiment of firing at a low temperature for a short time may achieve easy particle pulverization, which is advantageous for miniaturization, and easy control of the particle shapes, which is main characteristics of the single particle.

In the step of preparing the second positive electrode active material half-finished product, a zirconium content of the zirconium raw material may be 0.1 to 5 parts by weight, 0.1 to 3 parts by weight, 0.1 to 1 part by weight, or 0.1 to 0.5 parts by weight based on 100 parts by weight of metal of the nickel-based complex hydroxide.

The first positive active material half-finished product and the second positive active material half-finished product may be mixed in a weight ratio of about 95:5 to about 60:40, for example, about 90:10 to about 60:40, or about 80:20 to about 60:40. Herein, mixture density may be maximized, and capacity may be increased.

The mixing process of the first positive active material half-finished product and the second positive active material half-finished product may, for example, include adding them to a solvent such as distilled water and the like and then, washing and drying the mixture. Subsequently, the zirconium raw material is added to the dried mixture and then, dried in a firing furnace to perform the third heat treatment. The zirconium raw material may be added in an amount of about 0.1 parts by mole to about 5 parts by mole or about 0.1 parts by mole to about 3 parts by mole, about 0.1 parts by mole to about 1 parts by mole, about 0.1 parts by mole to about 0.5 parts by mole of zirconium based on about 100 parts by mole of all the metals excluding lithium in the mixture.

The third heat treatment may be performed, for example, at about 500 °C to about 800 °C or about 650 °C to about 750 °C for about 4 hours to about 24 hours or for about 10 hours to about 20 hours.

### Rechargeable Lithium Battery

Another embodiment provides a rechargeable lithium battery including a positive electrode, a negative electrode, a separator between the positive electrode and the negative electrode, and an electrolyte.

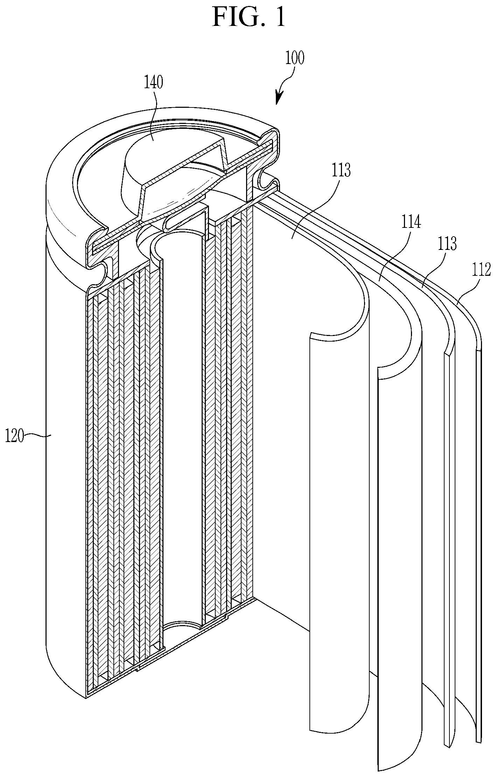

FIG. 1 is a schematic view illustrating a rechargeable lithium battery according to an embodiment. Referring to FIG. 1, a rechargeable lithium battery 100 according to an embodiment includes a battery cell including a positive electrode 114, a negative electrode 112 facing the positive electrode 114, a separator 113 between the positive electrode 114 and the negative electrode 112, and an electrolyte for a rechargeable lithium battery impregnating the positive electrode 114, negative electrode 112, and separator 113, a battery case 120 housing the battery cell, and a sealing member 140 sealing the battery case 120.

### Positive Electrode

The positive electrode for a rechargeable lithium battery includes a current collector and a positive active material layer on the current collector. The positive active material layer includes a positive active material, and may further include a binder and/or a conductive material.

The binder improves binding properties of positive active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The content of the binder in the positive active material layer may be about 1 wt% to about 5 wt% based on the total weight of the positive active material layer.

The conductive material is included to provide electrode conductivity and any electrically conductive material may be used as a conductive material unless it causes a chemical change. Examples of the conductive material may include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminium, silver, and the like; a conductive polymer such as a polyphenylene derivative; or a mixture thereof.

A content of the conductive material in the positive active material layer may be about 1 wt% to about 5 wt% based on the total weight of the positive active material layer.

An aluminium foil may be used as the positive electrode current collector, but is not limited thereto.

### Negative Electrode

A negative electrode for a rechargeable lithium battery includes a current collector and a negative active material layer on the current collector. The negative active material layer includes a negative active material, and may further include a binder and/or a conductive material.

The negative active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example, crystalline carbon, amorphous carbon, or a combination thereof as a carbon-based negative active material. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative active material or a Sn-based negative active material. The Si-based negative active material may include silicon, a silicon-carbon composite, SiOₓ (0 < x < 2), a Si-Q alloy (wherein Q is an alkali metal, an alkaline-earth metal, a Group 13 element, a Group 14 element, a Group 15 element, a Group 16 element, a transition metal, a rare earth element, and a combination thereof, but not Si) and the Sn-based negative active material may include Sn, SnO₂, an Sn-R alloy (wherein R is an alkali metal, an alkaline-earth metal, a Group 13 element, a Group 14 element, a Group 15 element, a Group 16 element, a transition metal, a rare earth element, and a combination thereof, but not Sn). At least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The silicon-carbon composite may be, for example, a silicon-carbon composite including a core including crystalline carbon and silicon particles and an amorphous carbon coating layer disposed on the surface of the core. The crystalline carbon may be artificial graphite, natural graphite, or a combination thereof. The amorphous carbon precursor may be a coal-based pitch, mesophase pitch, petroleum-based pitch, coal-based oil, petroleum-based heavy oil, or a polymer resin such as a phenol resin, a furan resin, or a polyimide resin. In this case, the content of silicon may be about 10 wt% to about 50 wt% based on the total weight of the silicon-carbon composite. In addition, the content of the crystalline carbon may be about 10 wt% to about 70 wt% based on the total weight of the silicon-carbon composite, and the content of the amorphous carbon may be about 20 wt% to about 40 wt% based on the total weight of the silicon-carbon composite. In addition, a thickness of the amorphous carbon coating layer may be about 5 nm to about 100 nm. An average particle diameter (D50) of the silicon particles may be about 10 nm to about 20 µm. The average particle diameter (D50) of the silicon particles may be preferably about 10 nm to about 200 nm. The silicon particles may exist in an oxidized form, and in this case, an atomic content ratio of Si:O in the silicon particles indicating a degree of oxidation may be about 99:1 to about 33:67. The silicon particles may be SiOₓ particles, and in this case, the range of x in SiOₓ may be greater than about 0 and less than about 2. In the present specification, unless otherwise defined, an average particle diameter (D50) indicates a particle where an accumulated volume is about 50 volume% in a particle distribution.

The Si-based negative active material or Sn-based negative active material may be mixed with the carbon-based negative active material. When the Si-based negative active material or Sn-based negative active material and the carbon-based negative active material are mixed and used, the mixing ratio may be a weight ratio of about 1:99 to about 90:10.

In the negative active material layer, the negative active material may be included in an amount of about 95 wt% to about 99 wt% based on the total weight of the negative active material layer.

In an embodiment, the negative active material layer further includes a binder, and may optionally further include a conductive material. A content of the binder in the negative active material layer may be about 1 wt% to about 5 wt% based on the total weight of the negative active material layer. In addition, when the conductive material is further included, the negative active material layer may include about 90 wt% to about 98 wt% of the negative active material, about 1 wt% to about 5 wt% of the binder, and about 1 wt% to about 5 wt% of the conductive material.

The binder serves to well adhere the negative active material particles to each other and also to adhere the negative active material to the current collector. The binder may be a water-insoluble binder, a water-soluble binder, or a combination thereof.

Examples of the water-insoluble binder include polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoroethylene, polyvinylidene fluoride, polyethylene, polypropylene, polyamideimide, polyimide, or a combination thereof.

The water-soluble binder may include a rubber binder or a polymer resin binder. The rubber binder may be selected from a styrene-butadiene rubber, an acrylated styrene-butadiene rubber, an acrylonitrile-butadiene rubber, an acrylic rubber, a butyl rubber, a fluororubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

When a water-soluble binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li. The amount of the thickener used may be about 0.1 parts by weight to about 3 parts by weight based on 100 parts by weight of the negative active material.

The conductive material is included to provide electrode conductivity and any electrically conductive material may be used as a conductive material unless it causes a chemical change. Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminium, silver, and the like; a conductive polymer such as a polyphenylene derivative; or a mixture thereof.

The negative electrode current collector may include one selected from a copper foil, a nickel foil, a stainless steel foil, a titanium foil, a nickel foam, a copper foam, a polymer substrate coated with a conductive metal, and a combination thereof.

### Electrolyte

The electrolyte includes a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, or aprotic solvent. Examples of the carbonate-based solvent include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. Examples of the ester-based solvent include methyl acetate, ethyl acetate, n-propyl acetate, dimethyl acetate, methyl propionate, ethyl propionate, γ-butyrolactone, decanolide, valerolactone, mevalonolactone, caprolactone, and the like. The ether-based solvent may be dibutyl ether, tetraglyme, diglyme, dimethoxyethane, 2-methyltetrahydrofuran, tetrahydrofuran, and the like and the ketone-based solvent may be cyclohexanone, and the like. In addition, the alcohol-based solvent may be ethyl alcohol, isopropyl alcohol, etc. and the aprotic solvent may be nitriles such as R-CN (where R is a C2 to C20 linear, branched, or cyclic hydrocarbon group and may include a double bond, an aromatic ring, or an ether bond), amides such as dimethylformamide, dioxolanes such as 1,3-dioxolane, sulfolanes, and the like.

The non-aqueous organic solvent may be used alone or in a mixture. When the non-aqueous organic solvent is used in a mixture, the mixture ratio may be controlled in accordance with a desirable battery performance.

In addition, in the case of the carbonate-based solvent, a mixture of a cyclic carbonate and a chain carbonate may be used. In this case, when the cyclic carbonate and the chain carbonate are mixed in a volume ratio of about 1:1 to about 1:9, the electrolyte may exhibit excellent performance.

The non-aqueous organic solvent may further include an aromatic hydrocarbon-based organic solvent in addition to the carbonate-based solvent. In this case, the carbonate-based solvent and the aromatic hydrocarbon-based organic solvent may be mixed in a volume ratio of about 1:1 to about 30:1.

The aromatic hydrocarbon-based solvent may be an aromatic hydrocarbon-based compound represented by Chemical Formula I.

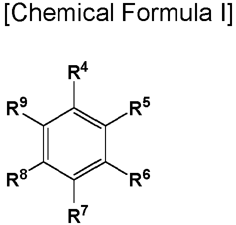

In Chemical Formula I, R⁴ to R⁹ are the same or different and are selected from hydrogen, a halogen, a C1 to C10 alkyl group, a C1 to C10 haloalkyl group, and a combination thereof.

Specific examples of the aromatic hydrocarbon-based solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include vinylene carbonate or an ethylene carbonate-based compound represented by Chemical Formula II in order to improve cycle-life of a battery.

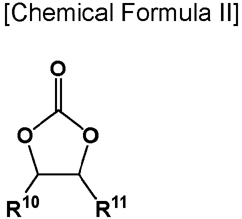

In Chemical Formula II, R¹⁰ and R¹¹ are the same or different and selected from hydrogen, a halogen, a cyano group, a nitro group, and fluorinated C1 to C5 alkyl group, provided that at least one of R¹⁰ and R¹¹ is a halogen, a cyano group, a nitro group, and fluorinated C1 to C5 alkyl group, and R¹⁰ and R¹¹ are not simultaneously hydrogen.

Examples of the ethylene carbonate-based compound may be difluoroethylene carbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive for improving cycle-life may be used within an appropriate range.

The lithium salt dissolved in the non-aqueous organic solvent supplies lithium ions in a battery, enables a basic operation of a rechargeable lithium battery, and improves transportation of the lithium ions between positive and negative electrodes.

Examples of the lithium salt include at least one selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide; LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein x and y are natural numbers, for example, an integer ranging from 1 to 20, lithium difluoro(bisoxalato) phosphate, LiCl, Lil, LiB(C₂O₄)₂ (lithium bis(oxalato) borate, LiBOB), and lithium difluoro(oxalato)borate (LiDFOB).

The lithium salt may be used in a concentration ranging from about 0.1 M to about 2.0 M. When the lithium salt is included at the above concentration range, an electrolyte may have excellent performance and lithium ion mobility due to optimal electrolyte conductivity and viscosity.

The separator 113 separates a positive electrode 114 and a negative electrode 112 and provides a transporting passage for lithium ions and may be any generally-used separator in a lithium ion battery. In other words, it may have low resistance to ion transport and excellent impregnation for an electrolyte. For example, the separator 113 may include a glass fiber, polyester, polyethylene, polypropylene, polytetrafluoroethylene, or a combination thereof and may have a form of a non-woven fabric or a woven fabric. For example, in a lithium ion battery, a polyolefin-based polymer separator such as polyethylene and polypropylene is mainly used. In order to ensure the heat resistance or mechanical strength, a coated separator including a ceramic component or a polymer material may be used. Optionally, it may have a mono-layered or multilayered structure.

Rechargeable lithium batteries may be classified as lithium ion batteries, lithium ion polymer batteries, and lithium polymer batteries according to the presence of a separator and the type of electrolyte used therein. The rechargeable lithium batteries may have a variety of shapes and sizes, and include cylindrical, prismatic, coin, or pouch-type batteries, and may be thin film batteries or may be rather bulky in size. Structures and manufacturing methods for these batteries pertaining to this disclosure are well known in the art.

The rechargeable lithium battery according to an embodiment may be used in an electric vehicle (EV), a hybrid electric vehicle such as a plug-in hybrid electric vehicle (PHEV), and portable electronic device because it implements a high capacity and has excellent storage stability, cycle-life characteristics, and high rate characteristics at high temperatures.

Hereinafter, examples of the present invention and comparative examples are described. However, the examples are for the purpose of illustration and are not to be construed as limiting the present invention.

### Example 1

### 1. Preparation of Half-finished Products for First Positive Active Material

Nickel sulfate, cobalt sulfate, and manganese sulfate as metal raw materials in a mole ratio of 95:4:1 were dissolved in distilled water as a solvent to prepare a metal raw material mixed solution, and in order to form a complex compound, ammonia water (NH₄OH) and sodium hydroxide (NaOH) as a precipitant were prepared. After putting an ammonia water diluted solution in a continuous reactor, the metal raw material mixed solution was continuously added thereto, and the sodium hydroxide was added thereto to maintain pH inside the reactor. When a reaction slowly proceeded for 80 hours and then stabilized, a product overflown therefrom was collected and then, washed and dried, obtaining nickel-based composite hydroxide (Ni_{0.95}Co_{0.04}Mn_{0.01}(OH)₂) in the form of secondary particle.

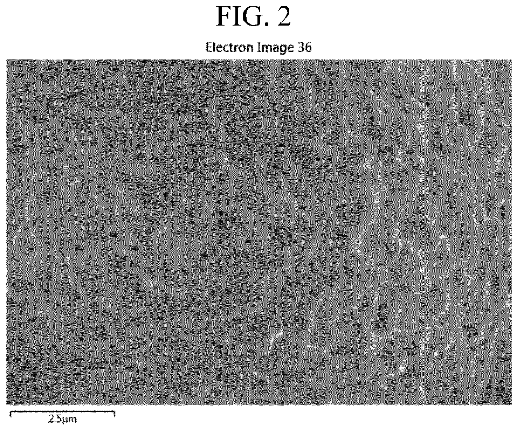

The obtained nickel-based composite hydroxide and LiOH satisfying Li/(Ni+Co+Mn) = 1.05 by mole ratio were put into a firing furnace and then, first heat-treated under an oxygen atmosphere at 750 °C for 15 hours to prepare the lithium nickel-based composite oxide in the form of secondary particle in which primary particles are aggregated and which had an average particle diameter of about 15 µm. FIG. 2 is an SEM image showing the surface of the secondary particle, which is a half-finished product of this first positive active material.

### 2. Preparation of Half-finished Product for Second Positive Active Material

Nickel sulfate, cobalt sulfate, and manganese sulfate as metal raw material in a mole ratio of 95:4:1 were dissolved in distilled water as a solvent to prepare a metal raw material mixed solution, and in order to form a complex compound, an ammonia water (NH₄OH) diluted solution and sodium hydroxide (NaOH) as a precipitant were prepared. The metal raw material mixed solution, ammonia water, and sodium hydroxide were put in a reactor, while controlling pH to keep an equally declining slope and then, reacted for about 20 hours, while stirred. The obtained slurry solution in the reactor was filtered, washed with distilled water with high purity, and dried for 24 hours, obtaining nickel-based composite hydroxide (Ni_{0.95}Co_{0.04}Mn_{0.01}(OH)₂) powder.

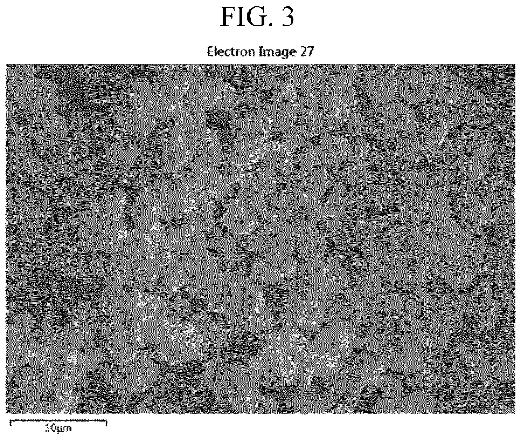

The obtained nickel-based composite hydroxide was mixed with LiOH satisfying Li/(Ni+Co+Mn)=1.05 by mole ratio and ZrO₂ so that a Zr content is 0.2 parts by mole based on 100 parts by mole of all metals excluding Li in the nickel-based composite hydroxide, and then, put in a firing furnace and second heat-treated under an oxygen atmosphere at 800 °C for 8 hours. The obtained product was pulverized, obtaining lithium nickel-based composite oxide in the form of a single particle having an average particle diameter of about 2.7 µm. FIG. 3 is an SEM image showing the surface of the single particle, which is a half-finished product of this second positive active material.

### 3. Preparation of Final Positive Active Material

The half-finished first positive active material and the half-finished second positive active material in a weight ratio of 70:30 were added to a distilled water solvent, washed, and then, dried. The obtained product and ZrO₂ were put in a firing furnace to have 0.05 parts by mole of Zr based on 100 parts by mole of all metals excluding lithium and then, third heat-treated under an oxygen atmosphere at about 710 °C for 15 hours, preparing a final positive active material.

### 4. Manufacture of Positive Electrode

95 wt% of the final positive active material, 3 wt% of a polyvinylidene fluoride binder, and 2 wt% of carbon nanotube conductive material were mixed in an N-methylpyrrolidone solvent to prepare positive active material slurry. The positive active material slurry was coated on an aluminium current collector, dried, and then compressed to manufacture a positive electrode.

### 5. Manufacture of Rechargeable Lithium Battery Cell

A coin half-cell was manufactured by disposing a separator having a polyethylene polypropylene multilayer structure between the manufactured positive electrode and lithium metal counter electrode, and injecting an electrolyte in which 1.0 M LiPF₆ lithium salt was added to a solvent in which ethylene carbonate and diethyl carbonate were mixed in a volume ratio of 50:50.

### Comparative Example 1

A positive active material and a rechargeable lithium battery cell were manufactured substantially in the same manner as in Example 1 except that the heat treatment was performed at 900 °C for 14 hours without adding ZrO₂ "2. Preparation of Half-finished Product for Second Positive Active Material" of Example 1.

### Evaluation Example 1: Zr Content Analysis on the Surface of Positive Active Material (SEM-EDS)

First, as a TOF-SIMS analysis result of a cross-section of the final positive active material of Example 1, Zr was not detected in the first and second positive active materials, which confirmed that Zr does not enter a lattice of the lithium nickel-based composite oxide.

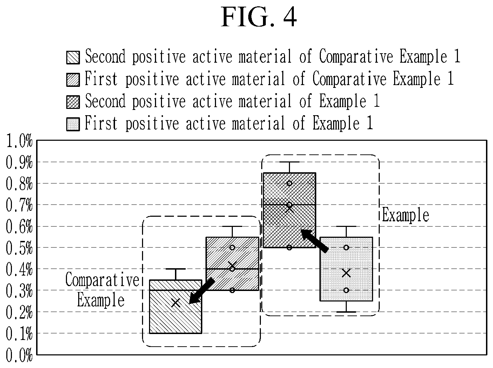

Subsequently, an SEM-EDS analysis was performed with respect to the surface of the final positive active materials of Example 1 and Comparative Example 1 to measure each Zr content on the surface of the first positive active material in the form of a secondary particle and on the surface of the second positive active material in the form of a single particle, and the results are shown in FIGS. 4 to 6.

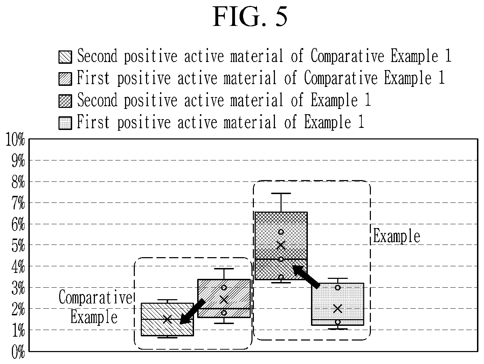

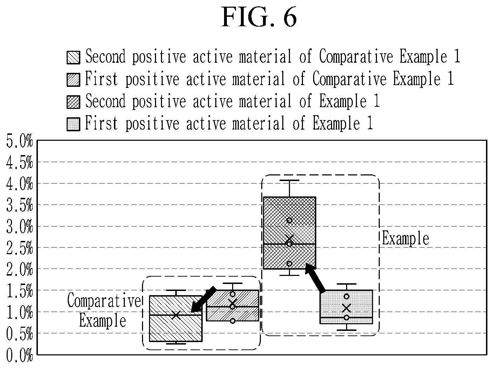

FIG. 4 shows a ratio of a Zr content (at%) relative to a total content of all elements on the surface of each positive active material, FIG. 5 shows a ratio of the Zr content (at%) to an Ni content (at%) on the surface of the positive active material, and FIG. 6 shows a ratio of the Zr content (at%) to the total content of all metals excluding lithium on the surface of the positive active material.

Referring FIG. 4, in the first positive active material of Example 1, the ratio of the Zr content relative to the total element content is about 0.38 at% on average, and in the second positive active material of Example 1, the ratio of the Zr contents to the total element content is about 0.68 at% on average, in which a ratio of the latter to the former is calculated into about 1.8. In addition, in the first positive active material of Comparative Example 1, the ratio of the Zr content to total element content is about 0.42 at% on average, and in the second positive active material of Comparative Example 1, the ratio of the Zr content to the total element content is about 0.24 at% on average, in which the ratio of the latter to the former is calculated into about 0.6.

Referring to FIG. 5, in the first positive active material of Example 1, the ratio of the Zr content to the Ni contents is about 0.021 on average, and in the second positive active material of Example 1, the ratio of the Zr content to the Ni content is about 0.049 on average, in which the ratio to the latter to the former is calculated into about 2.3. In addition, in the first positive active material of Comparative Example 1, the ratio of the Zr content to the Ni content is about 0.024 on average, and in the second positive active material of Comparative Example 1, the ratio of the Zr content to the Ni content is about 0.015 on average, in which the ratio of the latter to the former is calculated into about 0.6.

Referring to FIG. 6, in the first positive active material of Example 1, the ratio of the Zr content to the (Ni+Co+Al+Mn+Zr) content is about 1.06 at% on average, and in the second positive active material of Example 1, and the ratio of the Zr content to the (Ni+Co+Al+Mn+Zr) content is about 2.77 at% on average, in which a ratio of the latter to the former is calculated into about 2.6. In addition, in the first positive active material of Comparative Example 1, the ratio of the Zr content to the (Ni+Co+Al+Mn+Zr) is about 1.20 at% on average, and in the second positive active material of Comparative Example 1, the ratio of the Zr content to the (Ni+Co+Al+Mn+Zr) content is about 0.86 at% on average, in which a ratio of the latter to the former is calculated into about 0.7.

The analysis contents of FIGS. 4 to 6 are briefly shown in Table 1. In Table 1, small particles mean the second positive active material, and large particles are the first positive active material.

**(Table 1)**

| | Example 1 | Comparative Example 1 |
|---|---|---|
| Small/large particles ratio of (Zr/all elements) | 1.8 | 0.6 |
| Small/large particles ratio of (Zr/Ni) | 2.3 | 0.6 |
| Small/large particles ratio {Zr/(Ni+Co+Mn+Al+Zr)} | 2.6 | 0.7 |

As in Comparative Example 1, when Zr coating is performed after mixing the first positive active material in the form of secondary particle and the second positive active material in the form of a single particle, Zr is present more in the first positive active material than the second positive active material. This is understood because the first positive active material has a higher weight and a larger particle diameter than the second positive active material. On the contrary, as in Example 1, after adding the Zr raw material in preparing the second positive active material and mixing the second positive active material with the first positive active material, when the Zr coating is performed, Zr is present more in the second positive active material than in the first positive active material.

Example 1 performs firing at a lower temperature for a shorter time by using the Zr raw material to prepare the second positive active material in the form of a single particle, increasing about 10 times productivity and securing easier pulverization during the pulverization into the single particle and advantageously controlling particle shapes. In addition, a rechargeable lithium battery cell, to which the mixed positive active material in which Zr is more coated in the second positive active material in this method is applied, turns out to exhibit improved initial charge and discharge capacity and initial efficiency and cycle-life characteristics.

### Evaluation Example 2: Performance Evaluation of Rechargeable Lithium Battery Cells

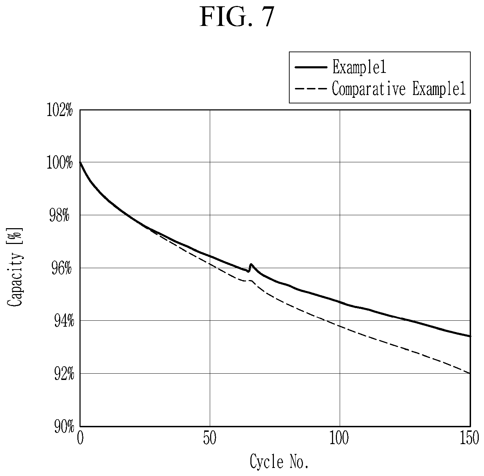

The rechargeable lithium battery cells according to Example 1 and Comparative Example 1 were initially charged under constant current (0.2 C) and constant voltage (4.25 V, 0.05 C cut-off) conditions, paused for 10 minutes, and discharged to 3.0 V under constant current (0.2 C) conditions to perform initial charge and discharge. Subsequently, the cells were 150 times charged and discharged at 0.5 C/0.5 C at 45 °C. The cells were evaluated with respect to capacity retention, which is discharge capacity at each cycle to initial discharge capacity, that is, high-temperature cycle-life characteristics, and the results are shown in FIG. 7.

Referring to FIG. 7, Example 1 exhibits improved cycle-life characteristics, compared with Comparative Example 1.

While this invention has been described in connection with what is presently considered to be practical example embodiments, it is to be understood that the invention is not limited to the disclosed embodiments. On the contrary, it is intended to cover various modifications and equivalent arrangements included within the scope of the appended claims.

### <Description of Symbols>

- 100: rechargeable lithium battery: 112: negative electrode
- 113: separator: 114: positive electrode
- 120: battery case: 140: sealing member

## Claims

1. A positive active material for a rechargeable lithium battery, comprising
a first positive active material including a secondary particle including lithium nickel-based composite oxide wherein in the secondary particle, a plurality of primary particles are aggregated, and zirconium on the surface of the secondary particle, and
a second positive active material including a single particle including lithium nickel-based composite oxide and zirconium on the surface of the single particle,
wherein a ratio of a Zr content (at%) relative to all elements on the surface of the single particle of the second positive active material to a Zr content (at%) to all elements on the surface of the secondary particle of the first positive active material is 1.5 to 3.0.

2. The positive active material of claim 1, wherein
the ratio of the Zr content (at%) relative to all elements on the surface of the single particle of the second positive active material to the Zr content (at%) to all elements on the surface of the secondary particle of the first positive active material is 1.8 to 2.5.

3. The positive active material of claim 1 or claim 2, wherein
a ratio of a Zr element content relative to a Ni element content on the surface of the single particle of the second positive active material to a Zr element content relative to a Ni element content on the surface of the secondary particle of the first positive active material is 2.0 to 4.0.

4. The positive active material of claim 1 or claim 2, wherein
a ratio of a Zr element content relative to a Ni element content on the surface of the single particle of the second positive active material to a Zr element content relative to a Ni element content on the surface of the secondary particle of the first positive active material is 2.0 to 3.0.

5. The positive active material of any one of claims 1 to 4, wherein
a ratio of a Zr content (at%) relative to the total metal excluding lithium on the surface of the single particle of the second positive active material to a Zr content (at%) relative to the total metal excluding lithium on the surface of the secondary particle of the first positive active material is 2.3 to 5.0.

6. The positive active material of any one of claims 1 to 4, wherein
a ratio of a Zr content (at%) relative to the total metal excluding lithium on the surface of the single particle of the second positive active material to a Zr content (at%) relative to the total metal excluding lithium on the surface of the secondary particle of the first positive active material is 2.6 to 3.3.

7. The positive active material of any one of claims 1 to 6, wherein
an average particle diameter of the secondary particle of the first positive active material is greater than an average particle diameter of the single particle of the second positive active material.

8. The positive active material of any one of claims 1 to 7, wherein
an average particle diameter of the secondary particle of the first positive active material is 5 µm to 25 µm, and
an average particle diameter of the single particle of the second positive active material is 1 µm to 10 µm.

9. The positive active material of any one of claims 1 to 8, wherein
the first positive active material is included in an amount of 60 wt% to 95 wt%, and the second positive active material is included in an amount of 5 wt% to 40 wt% based on the total amount of the first positive active material and the second positive active material.

10. The positive active material of any one of claims 1 to 9, wherein
the lithium nickel-based composite oxide of the first positive active material and the lithium nickel-based composite oxide of the second positive active material are each independently represented by Chemical Formula 1:
[Chemical Formula 1] Liₐ₁Niₓ₁M¹_{y1}M²_{z1}O_{2-b1}X_{b1}
wherein, in Chemical Formula 1, 0.9≤a1≤1.8, 0.7≤x1≤1, 0≤y1≤0.3, 0≤z1≤0.3, 0.9≤x1+y1+z1≤1.1, 0≤b1≤0.1, M¹ and M² are each independently at least one element selected from Al, B, Ba, Ca, Ce, Co, Cr, Cu, Fe, Mg, Mn, Mo, Nb, Si, Sr, Ti, V, W, and Zr, and X is at least one element selected from F, P, and S.

11. A method of manufacturing a positive active material for a rechargeable lithium battery, comprising
preparing a first positive active material half-finished product in the form of a secondary particle in which a plurality of primary particles are agglomerated by mixing a nickel-based composite hydroxide and a lithium raw material and performing a first heat treatment,
preparing a second positive active material half-finished product in the form of a single particle by mixing a nickel-based composite hydroxide, a lithium raw material, and a zirconium raw material, performing a second heat treatment and pulverizing, and
mixing a first positive active material half-finished product and a second positive active material half-finished product, and a zirconium raw material and performing a third heat treatment.

12. The method of claim 11, wherein the second heat treatment is performed at a temperature range of about 650°C to abtou 850°C.

13. The method of claim 11 or claim 12, in the step of preparing the second positive active material half-finished product, a zirconium content in the zirconium raw material is from about 0.1 to about 5 parts by weight based on 100 parts by weight of the metals in the nickel-based complex hydroxide.

14. The method of any one of claims 11 to 13, wherein the first positive active material half-finished product and the second positive active material half-finished product are mixed in a weight ratio of 95:5 to 60:40.

15. The method of any one of claims 11 to 14, wherein the third heat treatment is performed in a temperature range of 500°C to 800°C.

16. The method of any one of claims 11 to 15, wherein a zirconium content of the zirconium raw material in the third heat treatment step is 0.1 to 5 mole parts per 100 mole parts of total metal excluding lithium in the mixture of the first positive active material half-finished product and the second positive active material half-finished product.

17. A rechargeable lithium battery, comprising
a positive electrode including the positive active material of any one of claims 1 to 10, a negative electrode, and an electrolyte.

## Patentansprüche

1. Positives Aktivmaterial für eine wiederaufladbare Lithiumbatterie, umfassend
ein erstes positives Aktivmaterial, das ein sekundäres Teilchen enthält, das Verbundoxid auf Lithium-Nickel-Basis enthält, wobei in dem sekundären Teilchen eine Vielzahl von primären Teilchen aggregiert sind, und Zirkonium auf der Oberfläche des sekundären Teilchens, und
ein zweites positives Aktivmaterial, das ein einzelnes Teilchen enthält, das Verbundoxid auf Lithium-Nickel-Basis und Zirkonium auf der Oberfläche des einzelnen Teilchens enthält,
wobei ein Verhältnis eines Zr-Gehalts (At%) relativ zu allen Elementen auf der Oberfläche des einzelnen Teilchens des zweiten positiven Aktivmaterials zu einem Zr-Gehalt (At%) zu allen Elementen auf der Oberfläche des sekundären Teilchens des ersten positiven Aktivmaterials 1,5 bis 3,0 ist.

2. Positives Aktivmaterial nach Anspruch 1, wobei
das Verhältnis des Zr-Gehalts (At%) relativ zu allen Elementen auf der Oberfläche des einzelnen Teilchens des zweiten positiven Aktivmaterials zu dem Zr-Gehalt (At%) zu allen Elementen auf der Oberfläche des sekundären Teilchens des ersten positiven Aktivmaterials 1,8 bis 2,5 ist.

3. Positives Aktivmaterial nach Anspruch 1 oder Anspruch 2, wobei
ein Verhältnis eines Zr-Elementgehalts relativ zu einem Ni-Elementgehalt auf der Oberfläche des einzelnen Teilchens des zweiten positiven Aktivmaterials zu einem Zr-Elementgehalt relativ zu einem Ni-Elementgehalt auf der Oberfläche des sekundären Teilchens des ersten positiven Aktivmaterials 2,0 bis 4,0 ist.

4. Positives Aktivmaterial nach Anspruch 1 oder Anspruch 2, wobei
ein Verhältnis eines Zr-Elementgehalts relativ zu einem Ni-Elementgehalt auf der Oberfläche des einzelnen Teilchens des zweiten positiven Aktivmaterials zu einem Zr-Elementgehalt relativ zu einem Ni-Elementgehalt auf der Oberfläche des sekundären Teilchens des ersten positiven Aktivmaterials 2,0 bis 3,0 ist.

5. Positives Aktivmaterial nach einem der Ansprüche 1 bis 4, wobei
ein Verhältnis eines Zr-Gehalts (At%) relativ zu dem gesamten Metall außer Lithium auf der Oberfläche des einzelnen Teilchens des zweiten positiven Aktivmaterials zu einem Zr-Gehalt (At%) relativ zu dem gesamten Metall außer Lithium auf der Oberfläche des sekundären Teilchens des ersten positiven Aktivmaterials 2,3 bis 5,0 ist.

6. Positives Aktivmaterial nach einem der Ansprüche 1 bis 4, wobei
ein Verhältnis eines Zr-Gehalts (At%) relativ zu dem gesamten Metall außer Lithium auf der Oberfläche des einzelnen Teilchens des zweiten positiven Aktivmaterials zu einem Zr-Gehalt (At%) relativ zu dem gesamten Metall außer Lithium auf der Oberfläche des sekundären Teilchens des ersten positiven Aktivmaterials 2,6 bis 3,3 ist.

7. Positives Aktivmaterial nach einem der Ansprüche 1 bis 6, wobei
ein durchschnittlicher Teilchendurchmesser des sekundären Teilchens des ersten positiven Aktivmaterials größer als ein durchschnittlicher Teilchendurchmesser des einzelnen Teilchens des zweiten positiven Aktivmaterials ist.

8. Positives Aktivmaterial nach einem der Ansprüche 1 bis 7, wobei
ein durchschnittlicher Teilchendurchmesser des sekundären Teilchens des ersten positiven Aktivmaterials 5 µm bis 25 µm ist und
ein durchschnittlicher Teilchendurchmesser des einzelnen Teilchens des zweiten positiven Aktivmaterials 1 µm bis 10 µm ist.

9. Positives Aktivmaterial nach einem der Ansprüche 1 bis 8, wobei
das erste positive Aktivmaterial in einer Menge von 60 Gew.-% bis 95 Gew.-% und das zweite positive Aktivmaterial in einer Menge von 5 Gew.-% bis 40 Gew.-% enthalten ist, basierend auf der gesamten Menge des ersten positiven Aktivmaterials und des zweiten positiven Aktivmaterials.

10. Positives Aktivmaterial nach einem der Ansprüche 1 bis 9, wobei
das Verbundoxid auf Lithium-Nickel-Basis des ersten positiven Aktivmaterials und das Verbundoxid auf Lithium-Nickel-Basis des zweiten positiven Aktivmaterials jeweils unabhängig durch die chemische Formel 1 repräsentiert werden:
[Chemische Formel 1] Liₐ₁Niₓ₁M¹_{y1}M²_{z1}O_{2-b1}X_{b1}
wobei in der chemischen Formel 1 0,9≤a1≤1,8, 0,7≤x1≤1, 0≤y1≤0,3, 0≤z1≤0,3, 0,9≤x1+y1+z1≤1,1, 0≤b1≤0,1, M¹ und M² jeweils unabhängig mindestens ein Element sind, ausgewählt aus Al, B, Ba, Ca, Ce, Co, Cr, Cu, Fe, Mg, Mn, Mo, Nb, Si, Sr, Ti, V, W und Zr, und X mindestens ein Element ist, ausgewählt aus F, P, und S.

11. Verfahren zum Herstellen eines positiven Aktivmaterials für eine wiederaufladbare Lithiumbatterie, umfassend
Herstellen eines Halbfertigprodukts eines ersten positiven Aktivmaterials in der Form eines sekundären Teilchens, in dem eine Vielzahl von primären Teilchen agglomeriert sind, durch Mischen eines Verbundhydroxids auf Nickelbasis und eines Lithium-Rohmaterials und Durchführen einer ersten Wärmebehandlung,
Herstellen eines Halbfertigprodukts eines zweiten positiven Aktivmaterials in der Form von einzelnen Teilchen durch Mischen eines Verbundhydroxids auf Nickelbasis, eines Lithium-Rohmaterials und eine Zirkonium-Rohmaterials, Durchführen einer zweiten Wärmebehandlung und Pulverisieren und
Mischen eines Halbfertigprodukts eines ersten positiven Aktivmaterials und eines Halbfertigprodukts eines zweiten positiven Aktivmaterials und eines Zirkonium-Rohmaterials und Durchführen einer dritten Wärmebehandlung.

12. Verfahren nach Anspruch 11, wobei die zweite Wärmebehandlung in einem Temperaturbereich von etwa 650 °C bis etwa 850 °C durchgeführt wird.

13. Verfahren nach Anspruch 11 oder Anspruch 12, wobei in dem Schritt des Herstellens des Halbfertigprodukts des zweiten positiven Aktivmaterials ein Zirkonium-Gehalt in dem Zirkonium-Rohmaterial von etwa 0,1 bis etwa 5 Gewichtsteile basierend auf 100 Gewichtsteile der Metalle in dem Komplexhydroxid auf Nickelbasis beträgt.

14. Verfahren nach einem der Ansprüche 11 bis 13, wobei das Halbfertigprodukt des ersten positiven Aktivmaterials und das Halbfertigprodukt des zweiten positiven Aktivmaterials in einem Gewichtsverhältnis von 95:5 bis 60:40 gemischt sind.

15. Verfahren nach einem der Ansprüche 11 bis 14, wobei die dritte Wärmebehandlung in einem Temperaturbereich von 500 °C bis 800 °C durchgeführt wird.

16. Verfahren nach einem der Ansprüche 11 bis 15, wobei ein Zirkonium-Gehalt des Zirkonium-Rohmaterials in dem dritten Wärmebehandlung-Schritt 0,1 bis 5 Molteile pro 100 Molteile des gesamten Metalls außer Lithium in der Mischung des Halbfertigprodukts des ersten positiven Aktivmaterials und des Halbfertigprodukts des zweiten positiven Aktivmaterials beträgt.

17. Wiederaufladbare Lithiumbatterie, umfassend
eine positive Elektrode, die das positive Aktivmaterial nach einem der Ansprüche 1 bis 10 enthält, eine negative Elektrode und ein Elektrolyt.

## Revendications

1. Matériau actif positif destiné à une batterie au lithium rechargeable, comprenant
un premier matériau actif positif incluant une particule secondaire incluant un oxyde composite à base de lithium et de nickel, dans lequel dans la particule secondaire, une pluralité de particules primaires sont agrégées et du zirconium sur la surface de la particule secondaire, et
un second matériau actif positif incluant une particule unique incluant un oxyde composite à base de lithium et de nickel et du zirconium sur la surface de la particule unique,
dans lequel un rapport entre une teneur en Zr (en %) par rapport à tous les éléments sur la surface de la particule unique du second matériau actif positif et une teneur en Zr (en %) par rapport à tous les éléments sur la surface de la particule secondaire du premier matériau actif positif est de 1,5 à 3,0.

2. Matériau actif positif selon la revendication 1, dans lequel
le rapport entre la teneur en Zr (en %) par rapport à tous les éléments sur la surface de la particule unique du second matériau actif positif et la teneur en Zr (en %) par rapport à tous les éléments sur la surface de la particule secondaire du premier matériau actif positif est de 1,8 à 2,5.

3. Matériau actif positif selon la revendication 1 ou la revendication 2, dans lequel
un rapport entre une teneur en élément Zr par rapport à une teneur en élément Ni sur la surface de la particule unique du second matériau actif positif et une teneur en élément Zr par rapport à une teneur en élément Ni sur la surface de la particule secondaire du premier matériau actif positif est de 2,0 à 4,0.

4. Matériau actif positif selon la revendication 1 ou la revendication 2, dans lequel
un rapport entre une teneur en élément Zr par rapport à une teneur en élément Ni sur la surface de la particule unique du second matériau actif positif et une teneur en élément Zr par rapport à une teneur en élément Ni sur la surface de la particule secondaire du premier matériau actif positif est de 2,0 à 3,0.

5. Matériau actif positif selon l'une quelconque des revendications 1 à 4, dans lequel
un rapport entre une teneur en Zr (en %) par rapport au métal total à l'exclusion du lithium sur la surface de la particule unique du second matériau actif positif et une teneur en Zr (en %) par rapport au métal total à l'exclusion du lithium sur la surface de la particule secondaire du premier matériau actif positif est de 2,3 à 5,0.

6. Matériau actif positif selon l'une quelconque des revendications 1 à 4, dans lequel
un rapport entre une teneur en Zr (en %) par rapport au métal total à l'exclusion du lithium sur la surface de la particule unique du second matériau actif positif et une teneur en Zr (en %) par rapport au métal total à l'exclusion du lithium sur la surface de la particule secondaire du premier matériau actif positif est de 2,6 à 3,3.

7. Matériau actif positif selon l'une quelconque des revendications 1 à 6, dans lequel
un diamètre de particule moyen de la particule secondaire du premier matériau actif positif est supérieur à un diamètre de particule moyen de la particule unique du second matériau actif positif.

8. Matériau actif positif selon l'une quelconque des revendications 1 à 7, dans lequel
un diamètre de particule moyen de la particule secondaire du premier matériau actif positif est de 5 µm à 25 µm, et
un diamètre de particule moyen de la particule unique du second matériau actif positif est de 1 µm à 10 µm.

9. Matériau actif positif selon l'une quelconque des revendications 1 à 8, dans lequel
le premier matériau actif positif est inclus en une quantité de 60 % en poids à 95 % en poids et le second matériau actif positif est inclus en une quantité de 5 % en poids à 40 % en poids sur la base de la quantité totale du premier matériau actif positif et du second matériau actif positif.

10. Matériau actif positif selon l'une quelconque des revendications 1 à 9, dans lequel
l'oxyde composite à base de lithium et de nickel du premier matériau actif positif et l'oxyde composite à base de lithium et de nickel du second matériau actif positif sont chacun représentés indépendamment par la formule chimique 1 :
[Formule chimique 1] Liₐ₁Niₓ₁M¹_{y1}M²_{z1}O_{2-b1}X_{b1}
dans lequel, dans la formule chimique 1, 0,9 ≤ a1 ≤ 1,8, 0,7 ≤ x1 ≤ 1, 0 ≤ y1 ≤ 0,3, 0 ≤ z1 ≤ 0,3, 0,9 ≤ x1 + y1 + z1 ≤ 1,1, 0 ≤ b1 ≤ 0,1, M¹ et M² sont chacun indépendamment au moins un élément sélectionné à partir de Al, B, Ba, Ca, Ce, Co, Cr, Cu, Fe, Mg, Mn, Mo, Nb, Si, Sr, Ti, V, W et Zr et X est au moins un élément sélectionné à partir de F, P et S.

11. Procédé de fabrication d'un matériau actif positif destiné à une batterie au lithium rechargeable, comprenant
la préparation d'un produit semi-fini à base d'un premier matériau actif positif sous la forme d'une particule secondaire dans laquelle une pluralité de particules primaires sont agglomérées en mélangeant un hydroxyde composite à base de nickel et une matière première au lithium et en réalisant un premier traitement thermique,
la préparation d'un produit semi-fini à base d'un second matériau actif positif sous la forme d'une particule unique en mélangeant un hydroxyde composite à base de nickel, une matière première au lithium et une matière première au zirconium, la réalisation d'un deuxième traitement thermique et d'une pulvérisation, et
le mélange d'un produit semi-fini à base d'un premier matériau actif positif et d'un produit semi-fini à base d'un second matériau actif positif et d'une matière première au zirconium et la réalisation d'un troisième traitement thermique.

12. Procédé selon la revendication 11, dans lequel le second traitement thermique est réalisé à une plage de températures d'environ 650 °C à environ 850 °C.

13. Procédé selon la revendication 11 ou la revendication 12, lors de l'étape consistant à préparer le produit semi-fini à base d'un second matériau actif positif, une teneur en zirconium dans la matière première à base de zirconium est d'environ 0,1 à environ 5 parties en poids sur la base de 100 parties en poids des métaux dans le complexe d'hydroxyde à base de nickel.

14. Procédé selon l'une quelconque des revendications 11 à 13, dans lequel le produit semi-fini à base d'un premier matériau actif positif et le produit semi-fini à base d'un second matériau actif positif sont mélangés selon un rapport pondéral de 95/5 à 60/40.

15. Procédé selon l'une quelconque des revendications 11 à 14, dans lequel le troisième traitement thermique est réalisé dans une plage de températures de 500 °C à 800 °C.

16. Procédé selon l'une quelconque des revendications 11 à 15, dans lequel une teneur en zirconium de la matière première à base de zirconium lors de l'étape de troisième traitement thermique est de 0,1 à 5 parties en moles pour 100 parties en moles de métal total à l'exclusion du lithium dans le mélange du produit semi-fini à base du premier matériau actif positif et du produit semi-fini à base du second matériau actif positif.

17. Batterie au lithium rechargeable, comprenant
une électrode positive incluant le matériau actif positif selon l'une quelconque des revendications 1 à 10, une électrode négative et un électrolyte.
